# EUROPÄISCHE PATENTSCHRIFT

(11) **EP 3 020 895 B1**
(45) Veröffentlichungstag und Bekanntmachung des Hinweises auf die Patenterteilung: **15.11.2017**
(21) Anmeldenummer: 15174635.1
(22) Anmeldetag: 30.06.2015
(51) Int. Cl.: E05B 79/20, E05B 81/90, E05B 85/10

(54) **TÜRGRIFF EINES FAHRZEUGS MIT EINEM ZUGMITTEL**
HANDLE FOR A VEHICLE WITH A PULLING DEVICE
POIGNEE DE PORTE D'UN VEHICULE AUTOMOBILE AYANT UN MOYEN DE TRACTION

(30) Priorität: 13.11.2014 DE 102014116641
(43) Veröffentlichungstag der Anmeldung: 18.05.2016
(73) Patentinhaber: Huf Hülsbeck & Fürst GmbH & Co. KG, 42551 Velbert (DE)
(72) Erfinder: Beck, Andreas, 44795 Bochum (DE); Witte, Martin, 48683 Ahaus (DE); Fichert, Ulrike, 42349 Wuppertal (DE); Gorenzweig, Igor, 42109 Wuppertal (DE); Mönig, Stefan, 58332 Schwelm (DE)
(74) Vertreter: Bals, Rüdiger

(56) Entgegenhaltungen:
- EP-A2- 1 473 423
- EP-A2- 2 284 339
- DE-U1-202008 011 297

## Beschreibung

Die vorliegende Erfindung betrifft einen Türgriff für eine Fahrzeugtür oder Fahrzeugklappe eines Kraftfahrzeuges nach dem Anspruch 1. Bei modernen Fahrzeugen ist es bekannt, eine Notfallvorrichtung vorzusehen, durch die die Fahrzeugtür oder Fahrzeugklappe, insbesondere in einer Notfallsituation, z. B. bei einer gefährlichen Seitenlage, Stromausfall, einem Unfall oder dergleichen, geöffnet werden kann. Insbesondere bei feststehenden Türgriffen, deren Elektronik im Normalbetrieb durch Sensoren eine Betätigungsabsicht eines Benutzers erkennt und eine Öffnung der Tür vornimmt, kann durch eine derartige Notfallvorrichtung eine Sicherheit für einen Benutzer des Fahrzeugs deutlich erhöht werden, da in einer Notfallsituation bspw. die zum Betrieb der Sensoren nötige elektrische Energie nicht mehr zur Verfügung stehen kann. Ein Öffnen der Tür, insbesondere auch von außen, kann somit jederzeit ermöglicht werden. Eine derartige Notfallvorrichtung kann dabei insbesondere auch ein Zugmittel umfassen, wobei durch Betätigung des Zugmittels ein manuelles Öffnen der Fahrzeugtür vorgenommen werden kann. Ein derartiges Zugmittel sollte dabei im Türgriff positionsfest und verliersicher angeordnet sein. Die Schrift EP 2 284 339 A2 offenbart ebenfalls einen gattungsgemäßen Türgriff.

Es ist daher Aufgabe der vorliegenden Erfindung, einen Türgriff für eine Fahrzeugtür zu schaffen, der zumindest einen der genannten Nachteile zumindest zum Teil überwindet. Insbesondere ist es Aufgabe der Erfindung, einen Türgriff bereitzustellen, der eine einfache und kostengünstige Anordnung eines Zugmittels im Türgriff ermöglicht.

Zur Lösung dieser Aufgabe wird ein Türgriff mit den technischen Merkmalen des Anspruches 1 vorgeschlagen, denen nachfolgende besondere Bedeutung zukommt. Zweckmäßige Ausgestaltungen der Erfindung sind in den abhängigen Unteransprüchen aufgeführt. Dabei gelten technische Merkmale des erfindungsgemäßen Türgriffes, soweit dies sinnvoll ist, zu verschiedenen Ausgestaltungsformen desselben gleichermaßen, so dass diesbezüglich wechselseitig Bezug genommen wird bzw. werden kann.

Die Aufgabe wird gelöst durch einen Türgriff einer Fahrzeugtür oder Fahrzeugklappe (ganz allgemein: einem beweglichen Teil) eines Fahrzeugs mit einem Zugmittel, wobei das Zugmittel mit einem abnehmbaren Abdeckelement in mechanische Wirkverbindung bringbar ist, und einem Behälterelement, wobei das Behälterelement im Inneren des Türgriffes angeordnet ist und zum Aufnehmen eines Funktionselementes des Türgriffes ausgebildet ist. Das Behälterelement ist zum Führen des Zugmittels ausgebildet und Führungselemente sind am Behälterelement angeordnet. Dabei sind die Führungselemente zum formschlüssigen Führen des Zugmittels am Behälterelement ausgebildet.

Ein erfindungsgemäßer Türgriff kann dabei bspw. ein beweglicher, aber insbesondere auch ein feststehender Türgriff einer Fahrzeugtür sein. Das Zugmittel des Türgriffes kann insbesondere bei einem derartigen feststehenden Türgriff bspw. zum manuellen Betätigen eines Türschlosses vorgesehen sein. Ein Abdeckelement, das bspw. zum Abdecken eines Schließzylinders ausgebildet ist, kann mit dem Zugmittel in mechanische Wirkverbindung bringbar sein, wodurch insbesondere das Abdeckelement fixiert werden kann. Auch kann dadurch z. B. eine Betätigung des Zugmittels erleichtert aber auch eine Verliersicherung für das Abdeckelement bereitgestellt werden. Das Zugmittel kann im Türgriff alternativ oder zusätzlich auch zum Sichern, Auslösen und/oder Betätigen von anderen Vorrichtungen und/oder Elementen des Türgriffes und/oder der Fahrzeugtür ausgebildet sein. Neben dem Zugmittel weist ein erfindungsgemäßer Türgriff zumindest ein Behälterelement auf, das im Inneren des Türgriffes angeordnet ist. Dafür kann bspw. ein Hohlraum des Türgriffes zur Aufnahme des Behälterelementes im Inneren des Türgriffes vorgesehen sein. Ein derartiger Türgriff kann hierfür zumindest zweiteilig ausgestaltet sein mit einem Unterteil und einem Oberteil, um den Hohlraum zu bilden. Das Behälterelement kann dabei bspw. quaderförmig oder zumindest im Wesentlichen quaderförmig und insbesondere bevorzugt an eine Form des Hohlraums im Türgriff angepasst ausgebildet sein. Auch Aufnahmen für Fixiermittel für eine Befestigung und/oder Fixierung des Behälterelementes im Türgriff können am Behälterelement vorhanden sein. Das Behälterelement ist wiederum zum Aufnehmen eines Funktionselementes des Türgriffes ausgebildet. Das Behälterelement weist dafür eine Aufnahme, bspw. ebenfalls einen Hohlraum, für eine Anordnung des Funktionselementes im Behälterelement auf. Ein Funktionselement kann dabei bspw. eine Elektronik, wie z. B. eine Sensoranordnung oder eine Beleuchtung, eine Heizung, ein Antrieb oder ähnliches sein. Diese Elektronik kann durch eine Vergussmasse geschützt und/oder gekapselt im Behälterelement untergebracht sein.

Erfindungswesentlich ist bei einem erfindungsgemäßen Türgriff vorgesehen, dass das Behälterelement zum Führen des Zugmittels ausgebildet ist. Durch das Führen des Zugmittels durch das Behälterelement kann eine Position des Zugmittels in Bezug auf das Behälterelement festgelegt werden. Damit kann automatisch das Zugelement im Türgriff fixiert und insbesondere verliersicher sowie funktionssicher angeordnet werden. Dabei stellt eine Führung insbesondere keine starre Verbindung zwischen dem Zugmittel und dem Behälterelement dar. Eine Betätigung des Zugmittels, die bspw. insbesondere mit einer Bewegung des Zugmittels längs seiner Erstreckung einhergeht, kann somit jederzeit und insbesondere ohne Behinderung durch die Führung durch das Behälterelement erfolgen. Insbesondere kann durch eine Bereitstellung einer Führung des Zugmittels durch das Behälterelement auf zusätzliche Fixiervorrichtungen für das Zugmittel im Türgriff verzichtet werden. Ein Bedarf an Bauraum und insbesondere Zeit und Kosten bei der Herstellung und Montage des Türgriffes können dadurch vermindert werden. Insgesamt kann somit durch ein Behälterelement, das zum Führen des Zugmittels ausgebildet ist, eine besonders einfache, kompakte und kostengünstige Anordnung und Fixierung des Zugmittels im bzw. am Türgriff realisiert werden.

Ferner kann es bei einem erfindungsgemäßen Türgriff vorgesehen sein, dass das Zugmittel entlang einer ersten Außenwand des Behälterelementes geführt ist und insbesondere entlang einer der ersten gegenüberliegenden zweiten Außenwand des Behälterelementes geführt ist. Entlang einer Außenwand des Behälterelementes bedeutet dabei gemäß der Erfindung insbesondere, dass das Zugmittel über die gesamte Länge oder zumindest im Wesentlichen über die gesamte Länge der Außenwand des Behälterelementes geführt ist. Dadurch kann eine besonders gute Führung des Zugmittels bereitgestellt werden, da das Zugmittel somit nicht nur punktuell an einem Ort, sondern an mehreren, über insbesondere die gesamte Länge der Außenwand verteilten, Stellen geführt werden kann. Selbstverständlich ist auch eine nicht nur punktuelle sondern flächige oder abschnittsweise Führung des Zugmittels entlang zumindest eines Teils der Außenwand denkbar. Durch eine Führung entlang einer zweiten Außenwand, die zusätzlich zur Führung entlang der ersten Außenwand vorgesehen sein kann, kann die ortsfeste Anordnung des Zugmittels durch die Führung am Behälterelement nochmals verbessert werden. Dies kann insbesondere darauf zurückgeführt werden, dass die zweite Außenwand der ersten gegenüberliegend angeordnet ist und somit das Zugmittel an zwei zumindest im Wesentlichen parallelen Außenwänden des Behälterelementes geführt ist. Besonders bevorzugt erstrecken sich dabei die erste und die zweite Außenwand in einer Richtung des Behälterelementes, in der das Behälterelement eine große Ausdehnung aufweist. Eine Führung des Zugmittels am Behälterelement kann dadurch nochmals verbessert werden.

Auch kann ein erfindungsgemäßer Türgriff dahingehend weiterentwickelt sein, dass das Zugmittel an einer dritten Außenwand des Behälterelementes, insbesondere einer zwischen der ersten Außenwand und der zweiten Außenwand angeordneten dritten Außenwand, zumindest abschnittsweise bogenartig, insbesondere kreisbogenartig, geführt ist. Durch eine bogenartige Führung, insbesondere durch eine kreisbogenartige Führung, kann eine Anordnungsrichtung des Zugmittels geändert werden, ohne dass eine Führung über und/oder um eine scharfe Kante des Behälterelementes und/oder einen Knick des Zugmittels nötig ist. Bei einer Betätigung des Zugmittels, die zumeist entlang einer Erstreckungsrichtung des Zugmittels erfolgt, kann durch eine bogenartige Führung das Zugmittel ohne Einschränkungen und erhöhten Kraftaufwand einfach bewegt werden, ohne dass eine Beschädigung des Zugmittels an einer scharfen Kante und/oder durch einen Knick im Zugmittel befürchtet werden muss. Insbesondere kann durch eine derartige bogenartige, insbesondere kreisbogenartige, Führung entlang einer dritten Außenwand, die zwischen der ersten und der zweiten Außenwand angeordnet ist, das Zugmittel besonders einfach und sicher an allen drei Außenwänden geführt und insbesondere auch betätigt werden.

Es kann ferner bei dem erfindungsgemäßen Türgriff vorgesehen sein, dass die dritte Außenwand des Behälterelementes an einem D-Artigen Vorsprung des Behälterelementes angeordnet ist. Ein Vorsprung kann dabei insbesondere ein massiver Abschnitt des Behälterelementes sein. D-artig im Sinne der Erfindung bedeutet dabei insbesondere, dass ein Abschnitt des Vorsprungs, der eine dritte Außenwand des Behälterelementes bildet, bogenartig, insbesondere kreisbogenartig, ausgebildet ist. Besonders bevorzugt kann sich dabei die dritte Außenwand von der ersten bis zur zweiten Außenwand erstrecken, sich an diese jeweils ohne Kante anschließen und zwischen diesen kreisbogenartig ausgebildet sein. Eine besonders gute und leichtgängige Führung des Zugmittels an der ersten, zweiten und dritten Außenwand des Behälterelementes kann dadurch erreicht werden.

Ferner kann ein erfindungsgemäßer Türgriff dahingehend weiterentwickelt sein, dass der D-artige Vorsprung durch zumindest eine Verstärkungsrippe abgestützt und/oder verstärkt ist. Ein Vorsprung ist, wie oben beschrieben, ein insbesondere massiver Abschnitt des Behälterelementes. Dadurch weist der Vorsprung keinen Hohlraum zur Aufnahme eines Funktionselementes auf und kann somit zumindest in einer Raumrichtung eine geringere Erstreckung als das restliche Behälterelement aufweisen. Insbesondere in diesem Fall stellt eine Verstärkungsrippe, die sich bevorzugt zwischen dem restlichen Behälterelement und dem Vorsprung erstreckt und diesen gegen das Behälterelement abstützt, eine besonders einfache Möglichkeit dar, um eine Stabilität des Vorsprungs zu erhöhen. Selbstverständlich können, wenn technisch möglich und sinnvoll, auch mehrere derartige Verstärkungsrippen zum Abstützen des Vorsprungs vorgesehen sein.

Gemäß einer besonders bevorzugten Ausgestaltungsform eines erfindungsgemäßen Türgriffes kann ferner vorgesehen sein, dass am Behälterelement, an zumindest einer Außenwand des Behälterelementes, Führungselemente angeordnet sind, wobei die Führungselemente zum Führen, insbesondere zum formschlüssigen Führen, des Zugmittels am Behälterelement ausgebildet sind. Durch derartige Führungselemente kann eine Führung des Zugmittels durch das Behälterelement besonders einfach bereitgestellt werden, da insbesondere nicht das gesamte Behälterelement für die Führung des Zugmittels ausgebildet sein muss. Die Führungsmittel können dabei an einer Außenwand des Behälterelementes, entlang der das Zugmittel geführt ist, angeordnet sein. Insbesondere kann durch ein formschlüssiges Führen des Zugmittels eine Betätigung des Zugmittels jederzeit ermöglicht werden. Dies ist insbesondere im Gegensatz zu einem kraft- und/oder stoffschlüssigen Anordnen des Zugmittels, bei dem eine Bewegung und damit eine Betätigung des Zugmittels nicht möglich oder zumindest deutlich erschwert sind.

Ferner kann ein erfindungsgemäßer Türgriff dahingehend weiterentwickelt sein, dass die Führungselemente L-artig ausgebildet sind, wobei insbesondere entlang des Zugmittels zumindest zwei der L-artigen Führungselemente gegengleich am Behälterelement, insbesondere an der Außenwand des Behälterelementes, angeordnet sind, um insbesondere eine geschlossene Aufnahme zu bilden. L-artig gemäß der Erfindung bedeutet dabei insbesondere, dass die Führungselemente zumindest zwei Abschnitte aufweisen, die derart aneinander angeordnet sind, dass sie einen Winkel kleiner ca. 135°, bevorzugt einen Winkel von ca. 90°, einschließen. Insbesondere bevorzugt können die L-artigen Führungselemente derart am Behälterelement angeordnet sein, dass sie mit dem ersten Abschnitt mit einer Außenwand des Behälterelementes verbunden sind und sich der zweite Abschnitt im Wesentlichen parallel zur Außenwand erstreckt. Dadurch kann besonders einfach zumindest in drei der vier Raumrichtungen senkrecht zur Erstreckung des Zugmittels das Zugmittel formschlüssig geführt werden, insbesondere durch die Außenwand und die beiden Abschnitte des L-artigen Führungselementes. Auch kann das Zugmittel bspw. in das L-artige Führungselement eingehängt werden, wodurch eine Montage des Türgriffes vereinfacht werden kann. Durch eine gegengleiche Anordnung von zumindest zwei der L-artigen Führungselemente, bei der die zwei Führungselemente derart angeordnet sind, dass sich der jeweilige erste Abschnitt der Führungselemente auf verschiedenen Seiten des Zugmittels befindet, kann eine formschlüssige Führung des Zugmittels in allen vier Raumrichtungen senkrecht zur Erstreckung des Zugmittels erreicht werden.

Des Weiteren kann bei einem erfindungsgemäßen Türgriff vorgesehen sein, dass die Führungselemente (gleichzeitig) zum Abstützen des Behälterelementes im Türgriff ausgebildet sind. Ein derartiges Abstützen stellt dabei insbesondere bevorzugt ein formschlüssiges Fixieren des Behälterelementes im Türgriff, insbesondere in einem Hohlraum im Türgriff, dar. Eine Bewegung des Behälterelementes im Hohlraum des Türgriffes kann dadurch vermieden werden, wodurch insbesondere auch Geräusche, bspw. ein Klappern, die durch eine derartige Bewegung entstehen können, reduziert oder sogar ganz verhindert werden können. Insbesondere muss auch nicht das gesamte Behälterelement auf die Form des Hohlraums angepasst sein, da eine Abstützung und Fixierung des Behälterelementes im Hohlraum des Türgriffes bereits durch die Führungselemente sichergestellt wird. Dadurch kann Material bei der Herstellung des Behälterelementes und/oder des Türgriffs eingespart werden.

Auch kann ein erfindungsgemäßer Türgriff dahingehend ausgebildet sein, dass das Behälterelement eine Zugmittelendenaufnahme zum Aufnehmen, insbesondere zum formschlüssigen Einhängen, eines Zugmittelendes des Zugmittels aufweist. Eine Führung des Zugmittels am Behälterelement führt zumeist zu einer Fixierung des Zugmittels in den vier Raumrichtungen senkrecht zur Erstreckung des Zugmittels. Durch eine Aufnahme eines Zugmittelendes in einer Zugmittelendenaufnahme, kann auch zumindest eine der beiden Raumrichtungen entlang der Erstreckung des Zugmittels, insbesondere bevorzugt beide Raumrichtungen entlang der Erstreckung des Zugmittels, abgedeckt werden. Ein formschlüssiges Einhängen eines Zugmittelendes in eine entsprechend geformte Zugmittelendenaufnahme stellt dabei eine besonders einfache Art und Weise einer derartigen Fixierung des Zugmittelendes dar.

Des Weiteren kann erfindungsgemäß vorgesehen sein, dass das Zugmittel zum mechanischen Betätigen eines Türschlosses ausgelegt ist. Daneben kann es erfindungsgemäß vorgesehen sein, dass das Türschloss mechanisch und/oder elektrisch betätigbar ausgebildet sein kann. Das Zugmittel ermöglicht vorteilhafterweise ein mechanisches Betätigen des Türschlosses, wenn eine Elektronik versagt oder keine Energie zur Verfügung steht, um das Türschloss im Normalbetrieb zu betätigen. Dabei ist die Erfindung gleichermaßen für rein mechanische oder rein elektrische sowie Kombi(tür)schlösser anwendbar. Auch für andere Technologien, wie sensor-, druckknopf-, oder piezoelementgesteuerte Türschlösser, die zum Teil eine elektrische Ansteuerung des Türschlosses erfordern, ist die Verwendung des erfindungsgemäßen Türgriffes vorteilhaft. So kann es durch einen erfindungsgemäßen Türgriff immer ermöglicht werden, die Fahrzeugtür im Notfall zu öffnen.

Vorteilhafterweise kann das Zugmittel flexibel in Form eines Bowdenzuges, Draht- oder Kunststoffseils oder einer Kette ausgebildet sein. Zudem ist es denkbar, dass das Zugmittel aus einem flexiblen, bspw. elastischen, Material ausgebildet sein kann. Dabei sind als geeignete Materialien nicht nur biegsame Metalle, wie z. B. Stahl, denkbar, sondern auch Kunststoffe, wie z. B. faserverstärkte Kunststoffe. Hierbei kann bspw. der Vorteil erreicht werden, dass über das Zugmittel ein einfacher Zugriff zu einer in dem Türaußengriff angeordnete Not-Betätigung eines Öffnungsmechanismus einer Tür bzw. Türschlosses realisiert werden kann. Das Zugmittel kann auch einen Formgedächtnisdraht aufweisen, der bei Anlegung einer elektrischen Energie in einen vordefinierten Zustand verformt wird, wobei diese Verformung zur mechanischen Auslösung einer Funktion genutzt werden kann. Ein derartiges Zugmittel benötigt keine Antriebsmittel um eine Zugkraft zu erzeugen, da die Zugkraft durch die Verformung bereits erzeugt wird.

Besonders bevorzugt kann bei einem erfindungsgemäßen Türgriff ferner vorgesehen sein, dass das Zugmittel Teil einer Seilzugvorrichtung ist. Eine Seilzugvorrichtung ist dabei eine einfache mechanische Maschine, bei der eine Kraft über das Zugmittel übertragen wird. Insbesondere durch ein Ziehen an einem Ende des Zugmittels durch einen Benutzer kann über das Zugmittel als Teil der Seilzugvorrichtung im Inneren der Fahrzeugtür ein Vorgang ausgelöst werden, bspw. ein Öffnen eines Türschlosses. Eine Seilzugvorrichtung stellt dabei eine besonders einfache Möglichkeit dar, eine Betätigung des Zugmittels ins Innere der Fahrzeugtür weiterzuleiten.

Auch kann ein erfindungsgemäßer Türgriff dahingehend ausgebildet sein, dass das Zugmittel durch ein Antriebsmittel, insbesondere ein mechanisches, elektrisches, hydraulisches, pneumatisches und/oder pyrotechnisches Antriebsmittel, betätigbar ist. Neben einer manuellen Betätigung des Zugmittels kann alternativ oder zusätzlich selbstverständlich auch ein Antriebsmittel zum Betätigen des Zugmittels vorgesehen sein. Durch ein derartiges Antriebsmittel kann eine Betätigung des Zugmittels auch ohne ein direktes manuelles Betätigen durch einen Benutzer ermöglicht werden. Ferner kann das Antriebsmittel als Teil des Behälterelementes ausgebildet sein. Auch eine Anordnung des Antriebsmittels in und/oder am Behälterelement ist möglich. Durch die vielfältigen Möglichkeiten einer Ausgestaltung und einer Anordnung des Antriebsmittels kann ein an den jeweiligen Bedarf besonders gut angepasstes Antreiben des Zugmittels bereitgestellt werden.

Erfindungsgemäß können das Abdeckelement und das Zugmittel direkt oder über ein Verbindungsmittel miteinander verbunden sein. Dabei kann das Verbindungsmittel in Form einer Aufnahme, eines Hakens, einer Öse, einer Klemme oder eines Clips, insbesondere an dem Abdeckelement, ausgebildet sein, um am Zugmittel einzugreifen. Dadurch ergibt sich bspw. der Vorteil, dass das Verbinden des Zugmittels mit dem Abdeckelement auf einfache Art und Weise erfolgen kann. Insbesondere im Rahmen der Montage kann ein Ende des Zugmittels schnell und einfach mit dem Verbindungselement verbunden werden. Dadurch kann sowohl das rein mechanische Betätigen des Zugmittels als auch das notfallsituationsbedingte Aktivieren des Zugmittels über das Abdeckelement vereinfacht werden.

Ferner kann bevorzugt bei einem erfindungsgemäßen Türgriff vorgesehen sein, dass das Funktionselement eine Elektronik des Türgriffes umfasst. Eine Elektronik im Sinne der Erfindung kann dabei bspw. eine Platine, eine Sensoranordnung und/oder eine Beleuchtung umfassen. Selbstverständlich kann auch eine Energieversorgung der Elektronik in das Funktionselement integriert sein. Eine Sensoranordnung kann ferner bspw. kapazitive, induktive, optische, thermische Sensoren und/oder Drucksensoren aufweisen. Auch kann die Elektronik im Behälterelement eingegossen sein. Eine besonders vielfältige und an verschiedenste Bedürfnisse anpassbare Ausgestaltung eines erfindungsgemäßen Türgriffes kann dadurch geschaffen werden.

Bevorzugt kann ein erfindungsgemäßer Türgriff dahingehend weiterentwickelt sein, dass die Elektronik eine Beleuchtungsvorrichtung aufweist und dass das Behälterelement zumindest einen Lichtauslass zum Durchlassen von Licht aufweist. Eine derartige Beleuchtungsvorrichtung kann bspw. für eine Vorfeldbeleuchtung und/oder eine Muldenbeleuchtung vorgesehen sein. Durch einen Lichtauslass als Teil des Behälterelementes kann es insbesondere ermöglicht werden, dass die Beleuchtungsvorrichtung als Teil der Elektronik im Inneren des Behälterelementes ausgebildet werden kann. Das Licht, dass durch die Beleuchtungsvorrichtung erzeugt wird, kann durch den Lichtauslass aus dem Behälterelement austreten und dem entsprechend zu beleuchtenden Bereich zugeführt werden. Externe Beleuchtungsvorrichtungen, die außerhalb des Behälterelementes angeordnet sind, können so vermieden werden. Ein erfindungsgemäßer Türgriff kann dadurch insgesamt einfacher aufgebaut sein, wodurch insbesondere bei der Herstellung Zeit und Kosten eingespart werden können.

Besonders bevorzugt kann ferner bei einem erfindungsgemäßen Türgriff vorgesehen sein, dass das Behälterelement zumindest im Bereich des zumindest einen Lichtauslasses ein durchsichtiges Material, insbesondere ein durchsichtiges Polycarbonat und/oder ein durchsichtiges Polymethylmethacrylat, aufweist. Durch die Verwendung eines durchsichtigen Materials zumindest im Bereich des zumindest einen Lichtauslasses kann erreicht werden, dass auch im Bereich des zumindest einen Lichtauslasses das Behälterelement durchgängig geschlossen ausgebildet ist und insbesondere kein Loch aufweisen muss. Eine integrale Stabilität des Behälterelementes kann dadurch gesteigert werden. Insbesondere ein durchsichtiges Polycarbonat und/oder ein durchsichtiges Polymethylmethacrylat stellen dabei besonders geeignete Werkstoffe dar, um zum einen eine hohe Stabilität des Behälterelementes zu gewährleisten und zum anderen eine hohe Lichtdurchlässigkeit im Bereich des Lichtauslasses bereitzustellen. Wenn technisch sinnvoll und möglich kann selbstverständlich auch das gesamte Behälterelement aus einem geeigneten, durchsichtigen Material bestehen, wodurch eine einstückige, insbesondere monolithische, Ausgestaltung des Behälterelementes, die in der Herstellung insbesondere besonders einfach und kostengünstig ist, ermöglicht werden kann.

Der erfindungsgemäße Türgriff kann als Kunststoffspritzgussteil ein- oder mehrteilig hergestellt sein. Ferner kann der Türgriff eine Notfallvorrichtung aufweisen, die zumindest teilweise durch das Abdeckelement und/oder das Zugmittel gebildet ist.

Weitere Maßnahmen und Vorteile sowie technische Merkmale der Erfindung ergeben sich aus den Ansprüchen, der nachfolgenden Beschreibung und den Zeichnungen. Dabei können unterschiedliche Merkmale für sich alleine und in einer beliebigen Kombination vorteilhaft sein, ohne den Rahmen der Erfindung zu verlassen. In den nachstehenden Figuren ist der erfindungsgemäße Türgriff in mehreren Ausführungsbeispielen detailliert dargestellt. In den nachfolgenden Figuren werden für die gleichen technischen Merkmale auch von unterschiedlichen Ausführungsbeispielen die identischen Bezugszeichen verwendet. Es zeigen jeweils schematisch:
- Fig. 1: einen erfindungsgemäßen Türgriff,
- Fig. 2: eine Innenansicht eines erfindungsgemäßen Türgriffes mit einem erfindungsgemäßen Behälterelement gemäß einer ersten Ausgestaltungsform,
- Fig. 3: eine erste perspektivische Ansicht des erfindungsgemäßen Behälterelementes gemäß der ersten Ausgestaltungsform,
- Fig. 4: eine zweite perspektivische Ansicht des erfindungsgemäßen Behälterelementes gemäß der ersten Ausgestaltungsform,
- Fig. 5: eine dritte perspektivische Ansicht des erfindungsgemäßen Behälterelementes gemäß der ersten Ausgestaltungsform, und
- Fig. 6: eine perspektivische Ansicht eines erfindungsgemäßen Behälterelementes gemäß einer zweiten Ausgestaltungsform.

In den nachfolgenden Figuren werden für die gleichen technischen Merkmale auch von unterschiedlichen Ausführungsbeispielen die identischen Bezugszeichen verwendet.

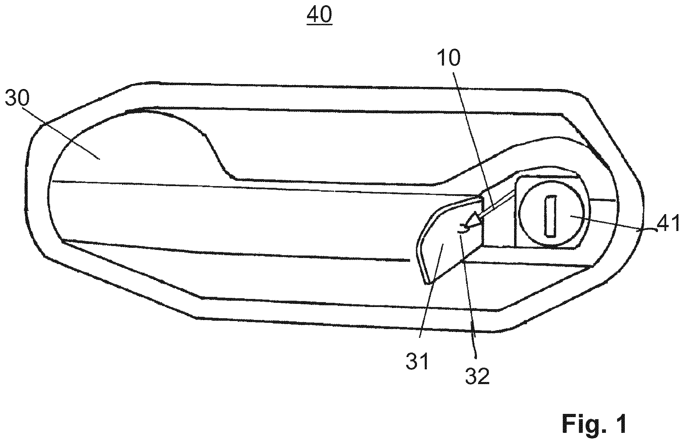

In Fig. 1 ist ein erfindungsgemäßer Türgriff 30 gezeigt, der an einer Fahrzeugtür 40 oder Fahrzeugklappe 40 angeordnet ist. Selbstverständlich kann der Türgriff 30 auch an anderen beweglichen Fahrzeugteilen, wie bspw. einer Heckklappe angeordnet sein. Der Türgriff 30 ist ferner optional als feststehender Türgriff 30 ausgebildet. Im Türgriff 30 ist vorzugsweise ein Schlosszylinder 41 angeordnet, der im normalen Betrieb durch ein Abdeckelement 31 abgedeckt ist. Dadurch kann ein optisch besonders ansprechender Türgriff 30 erreicht werden. Im abgebildeten Zustand ist das Abdeckelement 31 jedoch in einer Offenposition, wodurch der Schlosszylinder 41 zugänglich ist. Dies kann insbesondere in Situationen von Vorteil sein, in denen ein automatisches Entriegeln der Fahrzeugtür 41 nicht erfolgen kann, da auf diese Weise der Schlosszylinder 41 von außen betätigt und dadurch die Fahrzeugtür 41 entriegelt werden kann. In einer Notfallsituation, bspw. bei einer gefährlichen Seitenlage, einem Unfall oder dergleichen, kann eine Entriegelung der Fahrzeugtür 41 auch durch eine Notfallvorrichtung vorgenommen werden. Um ein Öffnen der so entriegelten Fahrzeugtür 41 vornehmen zu können, ist in der abgebildeten Ausgestaltungsform eines erfindungsgemäßen Türgriffs 30 ein Zugmittel 10 vorgesehen, das mit einem nicht abgebildeten Türschloss wirkverbunden, insbesondere über einen Seilzug wirkverbunden, ist. Selbstverständlich kann in anderen Ausgestaltungsformen das Zugmittel 10 auch zum Antreiben bzw. Ansteuern von anderen Vorrichtungen verwendet werden. Das Zugmittel 10 ist dabei über ein Verbindungsmittel 32 mit dem Abdeckelement 31 verbunden, insbesondere mechanisch wirkverbunden. Damit kann bspw. eine Zugänglichkeit des Zugmittels 10 verbessert werden, da dadurch das Zugmittel 10 beim Öffnen des Abdeckelementes 31 bereits ein wenig aus dem Türgriff 30 herausgezogen wird. Zusätzlich stellt auf diese Weise das Zugmittel 10 eine Verliersicherung für das Abdeckelement 31 dar.

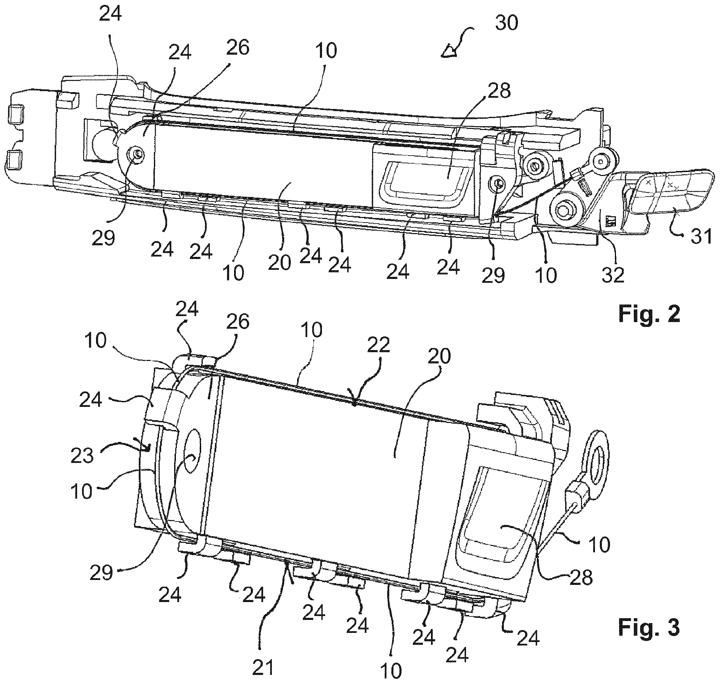

Fig. 2 zeigt schematisch ein Inneres eines erfindungsgemäßen Türgriffs 30 mit einem Behälterelement 20 gemäß einer ersten Ausgestaltungsform. Dieses Behälterelement 20 gemäß der ersten Ausgestaltungsform ist auch in den Fig. 3, 4 und 5 gezeigt, so dass die Fig. 2 bis 5 im Folgenden gemeinsam beschrieben werden.

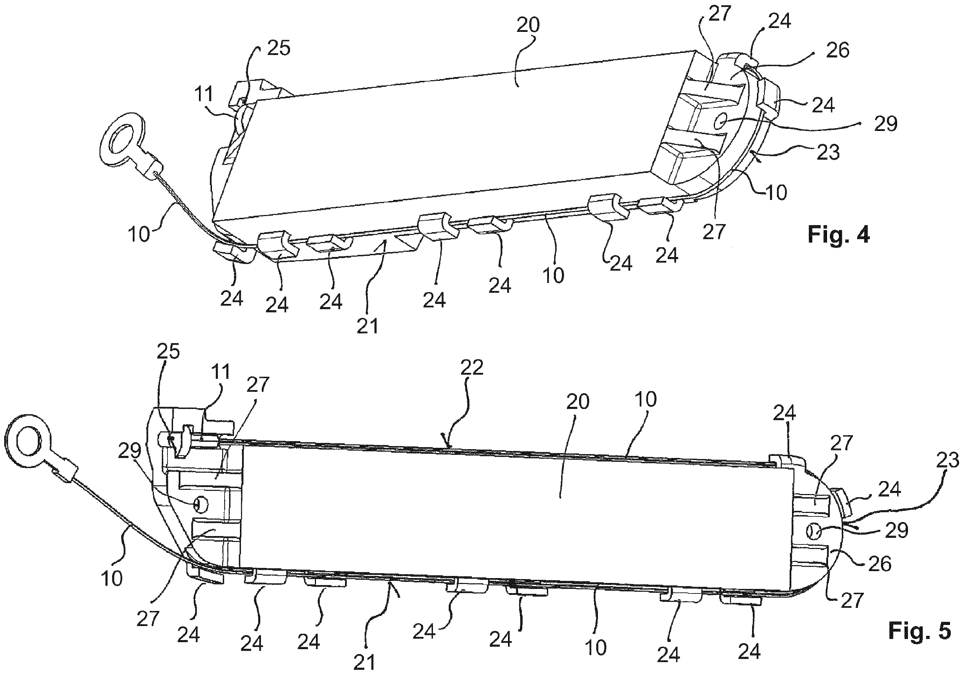

Das Behälterelement 20 ist im Inneren des Türgriffs 30, insbesondere in einem Hohlraum im Inneren des Türgriffs 30, angeordnet. Für eine Befestigung und/oder Fixierung des Behälterelementes 20 im Türgriff 30 weist das Behälterelement 20 Fixieraufnahmen 29 auf, in die bspw. Passstifte, Schrauben oder ähnliches zur Befestigung und/oder Fixierung des Behälterelementes 20 eingreifen können. Das Behälterelement 20 ist dabei zur Aufnahme eines Funktionselementes 33 (nicht mit abgebildet) ausgebildet. Das Funktionselement 33 kann dabei bevorzugt eine Elektronik, wie bspw. eine Platine, eine Sensoranordnung oder eine Beleuchtung, umfassen aber auch bspw. als eine Heizung oder ein Antrieb ausgebildet sein. Ferner weist das Behälterelement 20 einen Lichtauslass 28 auf, durch den ein Licht, das durch ein Funktionselement 33 mit einer Beleuchtung erzeugt wird, aus dem Behälterelement 20 austreten kann. Dafür weist das Behälterelement 20 zumindest im Bereich des Lichtauslasses 28 ein durchsichtiges Material, bspw. ein durchsichtiges Polycarbonat und/oder ein durchsichtiges Polymethylmethacrylat, auf. Ein Zugmittel 10 ist ebenfalls zumindest im Wesentlichen im Inneren des Türgriffs 30 angeordnet. Das Zugmittel 10 kann dabei bevorzugt flexibel in Form eines Bowdenzuges, Draht- oder Kunststoffseils ausgebildet sein und ist dabei an einem Ende über ein Verbindungsmittel 32, das als eine Hebelmechanik ausgebildet ist, mit einem Abdeckelement 31 mechanisch wirkverbunden. Erfindungswesentlich ist, dass das Behälterelement 20 zum Führen des Zugmittels 10 im Inneren des Türgriffs 30 ausgebildet ist. In der abgebildeten Ausgestaltungsform weist das Behälterelement 20 dafür mehrere Führungselemente 24 auf, die an drei Außenwänden 21, 22, 23 des Behälterelementes 20 angeordnet sind. Insbesondere sind dabei eine erste Außenwand 21 und eine zweite Außenwand 22 an dem Behälterelement 20 gegenüberliegend angeordnet. Die dritte Außenwand 23 ist an einem massiven D-artigen Vorsprung 26 angeordnet. Der Vorsprung 26 ist dabei durch Verstärkungsrippen 27 gegen das restliche Behälterelement 20 abgestützt, wodurch eine Stabilität des gesamten Behälterelementes 20 gesteigert werden kann. Durch den D-artigen Vorsprung 26 wird das Zugmittel 10 automatisch im Bereich der dritten Außenwand 23 durch das Behälterelement 20 kreisbogenartig geführt, siehe insbesondere Fig. 3 und 4. Eine Bewegung des Zugmittels 10 entlang seiner Erstreckungsrichtung ist dadurch besonders einfach möglich, insbesondere ohne eine Gefahr einer Beschädigung des Zugmittels 10 durch eine Kante des Behälterelementes 20 oder einen Knick im Zugmittel 10. Auch ist, bspw. in Fig. 4, deutlich sichtbar, dass die Führungselemente 24 L-artig ausgebildet sind. Dadurch kann das Zugmittel 10 bspw. in das jeweilige L-artige Führungselement 24 eingehängt werden, wodurch insgesamt eine Montage des Türgriffes 30 vereinfacht werden kann. Die beiden Abschnitte der Führungselemente 24 schließen dabei einen Winkel von ca. 90° ein. Ferner sind die L-artigen Führungselemente 24 derart am Behälterelement 20 angeordnet, dass sie mit einem ersten Abschnitt mit einer Außenwand 21, 22, 23 des Behälterelementes 20 verbunden sind und sich ein zweiter Abschnitt im Wesentlichen parallel zur jeweiligen Außenwand 21, 22, 23 erstreckt. Durch eine gegengleiche Anordnung von jeweils zwei der Führungselemente 24 kann eine formschlüssige Führung des Zugmittels 10 in allen vier Raumrichtungen senkrecht zur Erstreckung des Zugmittels 10 erreicht werden. Ein Zugmittelende 11 ist ferner in einer Zugmittelendenaufnahme 25 des Behälterelementes 20 angeordnet, insbesondere eingehängt. Dadurch kann auch in einer Erstreckungsrichtung des Zugmittels 10 eine gute und sichere Fixierung des Zugmittels 10 erreicht werden. Insgesamt kann durch ein erfindungsgemäßes Behälterelement 20 eine zuverlässige Führung des Zugmittels 10 im Inneren des Türgriffs 30 bereitgestellt werden. Auf zusätzliche Bauelemente zur Führung und/oder Fixierung des Zugmittels 10 kann somit verzichtet werden. Darüber hinaus kann durch die Führungselemente 24 auch das Behälterelement 20 im Inneren des Türgriffs 30 abgestützt, insbesondere formschlüssig abgestützt, werden. Eine Bewegung des Behälterelementes 20 im Inneren des Türgriffs 30, insbesondere in einem Hohlraum im Inneren des Türgriffs 30, kann so sicher vermieden werden. Dadurch können insbesondere auch Geräusche, wie bspw. ein Klappern, das durch derartige Bewegungen erzeugt wird, verhindert werden.

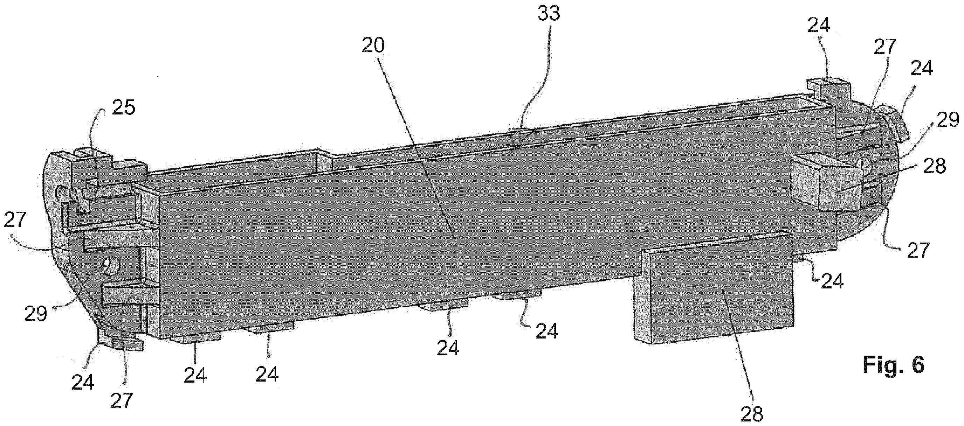

Fig. 6 zeigt eine weitere Ausgestaltungsform eines erfindungsgemäßen Behälterelementes 20. Das Behälterelement 20 weist dabei wie das in den Fig. 2 bis 5 abgebildete Behälterelement 20 L-artige Führungselemente 24, einen D-artigen Vorsprung 26 mit Verstärkungsrippen 27 und Fixieraufnahmen 29 auf. Darüber hinaus ist ein Hohlraum im Behälterelement 20 erkennbar, in den ein Funktionselement 33 angeordnet werden kann. Diese Funktionselement 33 weist dabei insbesondere eine Beleuchtung auf. Zum Ausleiten von Licht dieser Beleuchtung weist das abgebildete Behälterelement 20 zwei Lichtauslässe 28 auf. Zum Ausleiten des Lichts weist das Behälterelement 20 zumindest im Bereich des Lichtauslasses 28 ein durchsichtiges Material, bspw. ein durchsichtiges Polycarbonat und/oder ein durchsichtiges Polymethylmethacrylat, auf. Selbstverständlich kann auch, wenn technisch möglich und sinnvoll, das gesamte Behälterelement 20 aus einem geeigneten durchsichtigen Material bestehen. Dabei kann bspw. der nach unten gerichtete Lichtauslass 28 für eine Vorfeldbeleuchtung und der zweite Lichtauslass 28 für eine Muldenbeleuchtung vorgesehen sein. Durch das Vorhandensein dieser Lichtauslässe 28 kann es insbesondere ermöglicht werden, eine Beleuchtung als Teil des Funktionselementes 33 auszubilden und im Inneren des Behälterelementes 20 anzuordnen. Auf Beleuchtungsvorrichtungen, die zusätzlich und außerhalb des Behälterelementes 20 angeordnet sind, kann verzichtet werden. Ein erfindungsgemäßer Türgriff 30 (nicht mit abgebildet) kann dadurch insgesamt einfacher aufgebaut sein. Eine Reduktion von Zeit und Kosten bei der Herstellung eines erfindungsgemäßen Türgriffs 30 kann dadurch erreicht werden.

### Bezugszeichenliste

- 10: Zugmittel
- 11: Zugmittelende

- 20: Behälterelement
- 21: Erste Außenwand
- 22: Zweite Außenwand
- 23: Dritte Außenwand
- 24: Führungselement
- 25: Zugmittelendenaufnahme
- 26: Vorsprung
- 27: Verstärkungsrippe
- 28: Lichtauslass
- 29: Fixieraufnahme

- 30: Türgriff
- 31: Abdeckelement
- 32: Verbindungsmittel
- 33: Funktionselement

- 40: Fahrzeugtür / Fahrzeugklappe
- 41: Schlosszylinder

## Patentansprüche

1. Türgriff (30) einer Fahrzeugtür (40) oder Fahrzeugklappe (40) eines Fahrzeugs mit einem Zugmittel (10),
wobei das Zugmittel (10) mit einem abnehmbaren Abdeckelement (31) in mechanische Wirkverbindung bringbar ist, und
einem Behälterelement (20), wobei das Behälterelement (20) im Inneren des Türgriffes (30) angeordnet ist und zum Aufnehmen eines Funktionselementes (33) des Türgriffes (30) ausgebildet ist, und wobei das Behälterelement (20) zum Führen des Zugmittels (10) ausgebildet ist, wobei am Behälterelement (20) Führungselemente (24) angeordnet sind, wobei die Führungselemente (24) zum formschlüssigen Führen des Zugmittels (10) am Behälterelement (20) ausgebildet sind.

2. Türgriff (30) nach Anspruch 1,
**dadurch gekennzeichnet,**
**dass** das Zugmittel (10) entlang einer ersten Außenwand (21) des Behälterelementes (20) geführt ist und insbesondere entlang einer der ersten gegenüberliegenden zweiten Außenwand (22) des Behälterelementes (20) geführt ist.

3. Türgriff (30) nach einem der vorangegangenen Ansprüche,
**dadurch gekennzeichnet,**
**dass** das Zugmittel (10) an einer dritten Außenwand (23) des Behälterelementes (20), insbesondere einer zwischen der ersten Außenwand (21) und der zweiten Außenwand (22) angeordneten dritten Außenwand (23), zumindest abschnittsweise bogenartig, insbesondere kreisbogenartig, geführt ist.

4. Türgriff (30) nach Anspruch 3,
**dadurch gekennzeichnet,**
**dass** die dritte Außenwand (23) des Behälterelementes (20) an einem D-Artigen Vorsprung (26) des Behälterelementes (20) angeordnet ist.

5. Türgriff (30) nach Anspruch 4,
**dadurch gekennzeichnet,**
**dass** der D-artige Vorsprung (26) durch zumindest eine Verstärkungsrippe (27) abgestützt ist.

6. Türgriff (30) nach einem der vorangegangenen Ansprüche,
**dadurch gekennzeichnet,**
**dass** an zumindest einer Außenwand (21, 22, 23) des Behälterelementes (20), Führungselemente (24) angeordnet sind, wobei die Führungselemente (24) zum Führen, insbesondere zum formschlüssigen Führen, des Zugmittels (10) am Behälterelement (20) ausgebildet sind.

7. Türgriff (30) nach Anspruch 6,
**dadurch gekennzeichnet,**
**dass** die Führungselemente (24) L-artig ausgebildet sind, wobei insbesondere entlang des Zugmittels (10) zumindest zwei der L-artigen Führungselemente (24) gegengleich am Behälterelement (20), insbesondere an der Außenwand (21, 22, 23) des Behälterelementes (20), angeordnet sind.

8. Türgriff (30) nach Anspruch 6 oder 7,
**dadurch gekennzeichnet,**
**dass** die Führungselemente (24) zum Abstützen des Behälterelementes (20) im Türgriff (30) ausgebildet sind.

9. Türgriff (30) nach einem der vorangegangenen Ansprüche,
**dadurch gekennzeichnet,**
**dass** das Behälterelement (20) eine Zugmittelendenaufnahme (25) zum Aufnehmen, insbesondere zum formschlüssigen Einhängen, eines Zugmittelendes (11) des Zugmittels (10) aufweist.

10. Türgriff (30) nach einem der vorangegangenen Ansprüche,
**dadurch gekennzeichnet,**
**dass** das Zugmittel (10) zum mechanischen Betätigen eines Türschlosses ausgelegt ist, wobei insbesondere das Türschloss mechanisch und/oder elektrisch betätigbar ausgebildet ist.

11. Türgriff (30) nach einem der vorgenannten Ansprüche,
**dadurch gekennzeichnet,**
**dass** das Zugmittel (10) in Form eines Bowdenzuges, Draht- oder Kunststoffseils oder einer Kette ausgebildet ist, und dass insbesondere das Zugmittel (10) aus einem flexiblen Material ausgebildet ist.

12. Türgriff (30) nach einem der vorhergehenden Ansprüche,
**dadurch gekennzeichnet,**
**dass** das Zugmittel (10) Teil einer Seilzugvorrichtung ist.

13. Türgriff (30) nach einem der vorhergehenden Ansprüche,
**dadurch gekennzeichnet,**
**dass** das Zugmittel (10) durch ein Antriebsmittel, insbesondere ein mechanisches, elektrisches, hydraulisches, pneumatisches und/oder pyrotechnisches Antriebsmittel, betätigbar ist.

14. Türgriff (30) nach einem der vorhergehenden Ansprüche,
**dadurch gekennzeichnet,**
**dass** das Abdeckelement (31) und das Zugmittel (10) direkt oder über ein Verbindungsmittel (32) miteinander verbunden sind.

15. Türgriff (30) nach einem der vorhergehenden Ansprüche,
**dadurch gekennzeichnet,**
**dass** das Funktionselement (33) eine Elektronik des Türgriffes (30) umfasst.

16. Türgriff (30) nach Anspruch 15,
**dadurch gekennzeichnet,**
**dass** die Elektronik eine Beleuchtungsvorrichtung aufweist und dass das Behälterelement (20) zumindest einen Lichtauslass (28) zum Durchlassen von Licht aufweist.

17. Türgriff (30) nach Anspruch 16,
**dadurch gekennzeichnet,**
**dass** das Behälterelement (20) zumindest im Bereich des zumindest einen Lichtauslasses (28) ein durchsichtiges Material, insbesondere ein durchsichtiges Polycarbonat und/oder ein durchsichtiges Polymethylmethacrylat, aufweist.

## Claims

1. A door handle (30) for a vehicle door (40) or vehicle hatch (40) of a vehicle with a pulling device (10),
wherein the pulling device (10) is adapted to be brought into mechanical interaction with a detachable cover element (31), and
a container element (20), wherein the container element (20) is arranged inside of the door handle (30) and designed to accommodate a functional element (33) of the door handle (30),
and wherein
the container element (20) is designed to guide the pulling device (10), wherein guiding elements (24) are arranged on the container element (20), wherein the guiding elements (24) are designed for positively guiding the pulling device (10) on the container element (20).

2. The door handle (30) according to claim 1,
**characterized in that**
the pulling device (10) is guided along a first outer wall (21) of the container element (20), and in particular is guided along one of the first opposing second outer walls (22) of the container element (20).

3. The door handle (30) according to one of the preceding claims,
**characterized in that**
the pulling device (10) is guided along a third outer wall (23) of the container element (20), in particular a third outer wall (23) arranged between the first outer wall (21) and second outer wall (22), at least partially along an arc, in particular along a circular arc.

4. The door handle (30) according to claim 3,
**characterized in that**
the third outer wall (23) of the container element (20) is arranged on a D-like projection (26) of the container element (20).

5. The door handle (30) according to claim 4,
**characterized in that**
the D-like projection (26) is supported by at least one reinforcement rib (27).

6. The door handle (30) according to one of the preceding claims, **characterized in that**
guiding elements (24) are arranged on at least one outer wall (21, 22, 23) of the container element (20), wherein the guiding elements (24) are designed to guide, in particular to positively guide, the pulling device (10) on the container element (20).

7. The door handle (30) according to claim 6,
**characterized in that**
the guiding elements (24) are L-like in design, wherein at least two of the L-like guiding elements (24) are arranged diametrically opposed on the container element (20), in particular along the pulling device (10), in particular on the outer wall (21, 22, 23) of the container element (20).

8. The door handle (30) according to claim 6 or 7,
**characterized in that**
the guiding elements (24) are designed to support the container element (20) on the door handle (30).

9. The door handle (30) according to one of the preceding claims,
**characterized in that**
the container element (20) has a pulling device end receptacle (25) for accommodating, in particular for positively suspending, a pulling device end (11) of the pulling device (10).

10. The door handle (30) according to one of the preceding claims,
**characterized in that**
the pulling device (10) is designed to mechanically actuate a door lock, wherein in particular the door lock is designed to be mechanically and/or electrically actuated.

11. The door handle (30) according to one of the preceding claims,
**characterized in that**
the pulling device (10) is embodied in the form of a Bowden cable, wire or plastic rope or a chain, and that in particular the pulling device (10) is made of a flexible material.

12. The door handle (30) according to one of the preceding claims,
**characterized in that**
the pulling device (10) is part of a cable traction device.

13. The door handle (30) according to one of the preceding claims,
**characterized in that**
the pulling device (10) is operable by a driving means, in particular a mechanical, electrical, hydraulic, pneumatic and/or pyrotechnic driving means.

14. The door handle (30) according to one of the preceding claims,
**characterized in that**
the cover element (31) and pulling device (10) are connected with each other directly or by a connecting means (32).

15. The door handle (30) according to one of the preceding claims,
**characterized in that**
the functional element (33) encompasses electronics of the door handle (30).

16. The door handle (30) according to claim 15,
**characterized in that**
the electronics have an illuminating device, and that the container element (20) has at least one light outlet (28) for allowing light through.

17. The door handle (30) according to claim 16,
**characterized in that**
the container element (20) has a transparent material in the area of the at least one light outlet (28), in particular a transparent polycarbonate and/or a transparent polymethyl methacrylate.

## Revendications

1. Poignée (30) d'une porte (40) ou d'un hayon (40) de véhicule, comprenant un moyen de traction (10),
lequel moyen de traction (10) peut être mis en liaison mécanique opérante avec un élément amovible de recouvrement (31) ; et
un élément (20) formant réceptacle, lequel élément (20) formant réceptacle est logé à l'intérieur de la poignée (30) de porte, et est réalisé en vue de recevoir un élément fonctionnel (33) de ladite poignée (30) de porte,
sachant que
l'élément (20) formant réceptacle est réalisé en vue de guider le moyen de traction (10), des éléments de guidage (24) étant disposés sur ledit élément (20) formant réceptacle, lesdits éléments de guidage (24) étant réalisés en vue de guider, par complémentarité de formes, ledit moyen de traction (10) sur ledit élément (20) formant réceptacle.

2. Poignée (30) de porte, selon la revendication 1,
**caractérisée par le fait**
**que** le moyen de traction (10) est guidé le long d'une première paroi extérieure (21) de l'élément (20) formant réceptacle et, en particulier, le long d'une deuxième paroi extérieure (22) dudit élément (20) formant réceptacle qui est tournée à l'opposé de ladite première paroi.

3. Poignée (30) de porte, selon l'une des revendications précédentes,
**caractérisée par le fait**
**que** le moyen de traction (10) est guidé en décrivant un arc et notamment un arc de cercle, au moins par zones, sur une troisième paroi extérieure (23) de l'élément (20) formant réceptacle, en particulier une troisième paroi extérieure (23) interposée entre la première paroi extérieure (21) et la deuxième paroi extérieure (22).

4. Poignée (30) de porte, selon la revendication 3,
**caractérisée par le fait**
**que** la troisième paroi extérieure (23) de l'élément (20) formant réceptacle est située sur une saillie (26) dudit élément (20) formant réceptacle qui est pourvue d'une configuration du type en D.

5. Poignée (30) de porte, selon la revendication 4,
**caractérisée par le fait**
**que** la saillie (26), de configuration du type en D, est en appui par l'intermédiaire d'au moins une nervure de renforcement (27).

6. Poignée (30) de porte, selon l'une des revendications précédentes,
**caractérisée par le fait**
**que** des éléments de guidage (24) sont disposés sur au moins une paroi extérieure (21, 22, 23) de l'élément (20) formant réceptacle, lesdits éléments de guidage (24) étant réalisés en vue de guider et notamment de guider, par complémentarité de formes, le moyen de traction (10) sur ledit élément (20) formant réceptacle.

7. Poignée (30) de porte, selon la revendication 6,
**caractérisée par le fait**
**que** les éléments de guidage (24) sont de configuration du type en L, au moins deux, parmi lesdits éléments de guidage (24) de configuration du type en L, étant en particulier agencés, le long du moyen de traction (10), avec symétrie spéculaire sur l'élément (20) formant réceptacle et notamment sur la paroi extérieure (21, 22, 23) dudit élément (20) formant réceptacle.

8. Poignée (30) de porte, selon la revendication 6 ou 7,
**caractérisée par le fait**
**que** les éléments de guidage (24) sont réalisés en vue de procurer un appui à l'élément (20) formant réceptacle, dans ladite poignée (30) de porte.

9. Poignée (30) de porte, selon l'une des revendications précédentes,
**caractérisée par le fait**
**que** l'élément (20) formant réceptacle est muni d'un logement (25) d'extrémité du moyen de traction qui est dévolu à la réception et notamment à l'accrochage, par complémentarité de formes, d'une extrémité (11) dudit moyen de traction (10).

10. Poignée (30) de porte, selon l'une des revendications précédentes,
**caractérisée par le fait**
**que** le moyen de traction (10) est réalisé pour l'actionnement mécanique d'une serrure de porte, sachant notamment que ladite serrure de porte est réalisée pour pouvoir être actionnée mécaniquement et/ou électriquement.

11. Poignée (30) de porte, selon l'une des revendications précédentes,
**caractérisée par le fait**
**que** le moyen de traction (10) est réalisé sous la forme d'un câble Bowden, d'un câble en fil métallique ou en matière plastique, voire d'une chaîne ; et par le fait que ledit moyen de traction (10) est notamment réalisé en un matériau souple.

12. Poignée (30) de porte, selon l'une des revendications précédentes,
**caractérisée par le fait**
**que** le moyen de traction (10) fait partie d'un dispositif de traction par câble.

13. Poignée (30) de porte, selon l'une des revendications précédentes,
**caractérisée par le fait**
**que** le moyen de traction (10) peut être actionné par l'intermédiaire d'un moyen d'entraînement, en particulier un moyen d'entraînement mécanique, électrique, hydraulique, pneumatique et/ou pyrotechnique.

14. Poignée (30) de porte, selon l'une des revendications précédentes,
**caractérisée par le fait**
**que** l'élément de recouvrement (31) et le moyen de traction (10) sont reliés l'un à l'autre directement, ou par l'intermédiaire d'un moyen de liaison (32).

15. Poignée (30) de porte, selon l'une des revendications précédentes,
**caractérisée par le fait**
**que** l'élément fonctionnel (33) inclut une unité électronique de ladite poignée (30) de porte.

16. Poignée (30) de porte, selon la revendication 15,
**caractérisée par le fait**
**que** l'unité électronique comporte un dispositif d'éclairage ; et par le fait que l'élément (20), formant réceptacle, présente au moins une sortie (28) réalisée pour autoriser un passage de lumière.

17. Poignée (30) de porte, selon la revendication 16,
**caractérisée par le fait**
**que** l'élément (20) formant réceptacle comporte, au moins dans la région de la sortie de lumière (28) à présence minimale, un matériau transparent et, en particulier, un polycarbonate transparent et/ou un polyméthylméthacrylate transparent.
